# EUROPEAN PATENT APPLICATION

(11) **EP 4 597 059 A1**
(43) Date of publication of application: **06.08.2025**
(21) Application number: 24155334.6
(22) Date of filing: 01.02.2024
(51) Int. Cl.: G01L 1/02, G01L 5/16, G01L 5/22, G01F 1/20, G01F 1/28, G01F 1/34

(54) **FORCE SENSOR SYSTEM AND METHOD OF MANUFACTURING THE SAME**

(71) Applicant: Nederlandse Organisatie voor toegepast-natuurwetenschappelijk Onderzoek TNO, 2595 DA 's-Gravenhage (NL)
(72) Inventor: ZALAR, Peter, 2595 DA 's-Gravenhage (NL); KIRCHNER, Gerwin, 2595 DA 's-Gravenhage (NL); WEBER, Jan, 2595 DA 's-Gravenhage (NL)
(74) Representative: V.O.

(57) **Abstract**

A force sensor system (100) is presented herein that comprises a carrier substrate (1), a sensor layer thereon and a signal processor (5). The sensor layer has a contact sensitive surface (11) and comprises a plurality of resiliently deformable sensor cells (3a, 3b,...). The sensor cells each form an enclosure around a pocket (2a, 2b, 2c, 2d) communicating with a pressure sensor (4a, 4b, 4c, 4d) that is configured to provide a respective pressure signal (Spa, Spb,...) indicative for an inside pressure inside the pocket. The inside pressure of a sensor cell is dependent on an external force exerted thereon through the contact sensitive surface according to a pressure-force relationship, wherein the pressure to force relationship is dependent on a lateral direction of the external force for two or more of the plurality of sensor cells in a mutually different manner. The signal processor (5) is configured to receive the pressure signals and to provide an output sensor signal based on the received pressure signals.

## Description

The present application pertains to a force sensor system.

The present application further pertains to a method of manufacturing a force sensor system.

### BACKGROUND

In the technical field of robotics, there is a need to equip robots with tactile sensors so that they can efficiently perceive and manipulate objects in their environment. This ability is critical in applications like manufacturing and healthcare. Utilizing tactile sensors is important because it can serve as a feedback parameter for actions to be taken by the robot takes - like gripping an object or moving in its environment. Parameters to be obtained from tactile sensors include: shape, deformation, contact, pressure, and shear force.

WO2023014223 concerns a system for measuring external force. The system comprises a substrate forming a set of closed pockets having at least a flexible wall deforming as function of the external force and an enclosed MEMS devices, configured to cause variation of an electric signal as function of a pressure inside the pocket. The flexible wall is provided with an outwards protruding shape configured to flex inwards into the pocket in presence of the external force and provided with a resilient means configured to recover the outwards protruding shape absent the external force.

### SUMMARY

It is a first object of the present invention to provide an improved force sensor system.

It is a second object of the present invention to provide a method of manufacturing an improved force sensor system.

According to a first aspect, a force sensor system is provided that comprises a sensor layer on a carrier substrate. The sensor layer has a contact sensitive surface, and comprises a plurality of resiliently deformable sensor cells. The sensor cells each form an enclosure around a pocket that communicates with a pressure sensor that is configured to provide a respective pressure signal indicative for an inside pressure inside the pocket. The inside pressure of a sensor cell is dependent on an external force exerted thereon through the contact sensitive surface according to a pressure-force relationship, wherein the pressure to force relationship is dependent on a lateral direction of the external force for two or more of the plurality of sensor cells in a mutually different manner. The force sensor system further comprises a signal processor configured to receive the pressure signals and to provide an output sensor signal based on the received pressure signals.

The pressure sensor signal is indicative for a deformation occurring in the contact sensitive surface. Each pressure signal has a magnitude depending on the magnitude of the deformation of the contact surface and the lateral sensitivity of cell with which the pressure sensor communicates. Due to the fact that two or more sensor cells have a mutually different lateral sensitivity, the output sensor signal is indicative of the lateral direction of the deformation of the contact sensitive surface. Because the deformation depends on the force that causes it, the output signal is also suitable as an indication for that force. In some embodiments the signal processor is additionally configured to determine a magnitude of the lateral force or lateral deformation.

In an embodiment each pocket has a proper pressure sensor, however other embodiments are conceivable wherein two or more sensor cells have pockets that mutually communicate with a common pressure sensor. In this case the pressure sensed by a common pressure sensor is indicative for an average deformation of the two or more sensor cells that communicate with the common pressure sensor.

A sensor layer may comprise a stack of sensor cells. For example the sensor layer comprises a sensor cell stack of two or more sensor cells having a mutually different lateral direction sensitive pressure to force relationship. Alternatively a layer may comprise only sensor cells that are laterally arranged relative to each other.

In another example, a sensor layer stack is provided comprising two or more sensor layers with a respective lateral sensitivity and each layer comprises a plurality of sensor cells having a lateral direction sensitive pressure to force relationship according to the lateral sensitivity of the sensor layer. In an example a first sensor layer comprises sensor cells having a lateral sensitivity in the direction +x, and a second sensor layer comprises sensor cells having a lateral sensitivity in the direction -x. Upon exerting a force on the contact sensitive surface in the direction -x, this will mainly result in a flexure of the sensor cells in the second sensor layer. Upon exerting a force in the opposite direction, the sensor cells in the second sensor layer will substantially preserve their original shape and instead the deformation will occur in the sensor cells of the first sensor layer.

Dependent on the rank of a sensor cell in a sensor cell stack or the rank of the sensor cell layer of the sensor cell in the sensor layer stack, its response to a lateral action on the contact sensitive surface may be different. In an embodiment the signal processor comprises a compensation module to compensate for this effect. The compensation module comprises for example a lookup table or performs a compensation on the basis of a polynomial function.

In an embodiment the force sensor system comprises at least two sensor cell stacks of two or more sensor cells wherein the two or more sensor cells having a mutually different lateral direction sensitive pressure to force relationship are present in a mutually different order. In this embodiment a compensation can be obviated because each type of sensor cell has a species at a mutually different height of a sensor cell stack. For each lateral direction different pressure signals can be obtained from different sensor cell stack levels. Therewith a bias in the measurement due to arrangement of sensor cells can be avoided without requiring a compensation operation

In an example of the latter embodiment the at least two sensor cell stacks are mechanically coupled to a shared cover, of which the free surface is the contact sensitive surface. The shared cover is for example comprising a shared elastic cover layer. The shared elastic cover layer distributes a lateral force exerted on a position of the contact sensitive surface to sensor cells in the neighborhood of that position. In the presence of a lateral force exerted on the contact sensitive surface, both the shared elastic cover layer and the sensor cells or sensor cell stacks in the neighborhood of the affected position will deform until the elastic forces of the sensor cell or sensor cell stacks balance out against the lateral force exerted on the contact sensitive surface. Therewith the sensor cells or sensor cell stacks having a relatively low stiffness in the direction of the applied lateral force will deform more than sensor cells/stacks having a higher stiffness in that direction. The range over which the lateral force is distributed on the array of pillars is dependent on the elasticity and the thickness of the shared elastic cover layer.

In an embodiment of the force sensor system the sensor cells in a sensor cell layer are mechanically coupled to the cover layer and/or to the carrier substrate through an elastic coupling member. Each sensor cell and its elastic coupling member(s) forms an elastically deformable pillar. If a lateral force is exerted on the touch sensitive surface, the shared cover layer will exert the lateral force to the elastic coupling members of the pillars. In case the shared cover is stiff, the lateral deformation is the same for the top surface of all pillars. However, the distribution of the deformation between the elastic coupling member and the sensor cell of the pillar depends on the lateral sensitivity of the sensor cell. If the lateral force is applied in a direction for which the sensor cell has a relatively low stiffness then the sensor cell will deform relatively strong. If the lateral force is applied in a direction for which the sensor cell has a relatively high stiffness then the largest deformation will be in the elastic coupling member.

Some embodiments of the force sensor system further comprise a reinforcement structure to mitigate deformations in a direction perpendicular to the touch sensitive surface. Therewith the force sensor system can more accurately determine a lateral direction of the external force. In one example thereof the reinforcement structure comprises an internal skeleton in one or more sensor cells. Different embodiments are possible. In one embodiment an internal skeleton is provided in a sensor cell that is flexible, but not compressible. Therewith it does not restrict a flexure of the sensor cell, but it avoids that the sensor cell is compressed in a direction transverse to the contact sensitive surface. In some examples the internal skeleton allows a partial compression but blocks or restricts a further compression. Alternatively, an internal skeleton may be provided that blocks or restricts a lateral deformation beyond a threshold value. In another example the reinforcement structure comprises an embedding medium between the sensor cells. The embedding medium comprises for example a flexible polymer filled with rigid pellets. Therewith the embedding medium and the sensor cells arranged therein are capable to deform laterally, while a compressive deformation is avoided.

Embodiments of the improved force sensor system may be incorporated in a flow sensor for sensing flow properties of a fluid conducted by a tube. As an example thereof the force sensor system may have its force sensor layer accommodated with its carrier substrate to an inner wall of the tube. A fluid conducted by the tube will exert a lateral force on the contact sensitive surface that is indicative for the magnitude of the flow. In an example of such a flow sensor the force sensor layer comprises a first force sensor layer portion having sensor cells which have a relatively high lateral sensitivity in a first longitudinal direction (-x) of the tube, and a second force sensor layer portion having sensor cells which have a relatively high lateral sensitivity in a second longitudinal direction (x) of the tube, opposite to the first longitudinal direction. Therewith the flow sensor has a bidirectional sensitivity. A force sensor layer portion in a flow sensor may have a plurality of sensor cells having mutually communicating pockets and common pressure sensor for measuring a pressure therein. In an example, one of the sensor cells having mutually communicating pockets is provided with a pressure sensor. The pockets of the sensor cells are communicatively coupled through a channel. In another example the common pressure sensor is arranged outside the pockets, but is communicatively coupled thereto by an additional channel.

According to a second aspect a method of manufacturing an improved force sensor system is provided that comprises the following steps:
providing a carrier substrate;
providing a sensor layer having a force sensitive surface,
the sensor layer comprising a plurality of sensor cells that each form an enclosure around a pocket that communicates with a pressure sensor configured to provide a respective sense signal indicative for an inside pressure inside the pocket,
the inside pressure being dependent on an external force exerted through the force sensitive surface on the pocket according to a pressure-force relationship, wherein the pressure to force relationship is dependent on a lateral direction of the external force for two or more of the plurality of cells in a mutually different manner,
providing a signal processor configured to receive the sense signals and to provide an indication of a lateral direction of a force exerted to the force sensitive surface.

An embodiment of the method according to the second aspect comprises:
providing the carrier substrate with a grid of pressure sensors and a signal transfer structure for transferring pressure sensor signals to the signal processor;
wherein providing the sensor layer comprises providing a patterned elastic layer having a plurality of hollow pillars and adhering the patterned elastic layer to the carrier substrate to form respective closed cavities accommodating respective pressure sensors.

In an example thereof the patterned elastic layer is created by one of 3D printing (stereolithographic or fused deposition modeling), molding, and thermoforming. Respective reinforcement structures may be accommodated in the respective closed cavities for restricting or limiting one or more degrees of freedom. In an optional further step, the sensor layer is overmolded.

### BRIEF DESCRIPTION OF THE DRAWINGS

These and other aspects are described in more detail with reference to the drawing. Therein:
FIG. 1 schematically shows a top view of an embodiment of the improved force sensor system;
FIG. 1A shows a cross section thereof according to IA-IA in FIG. 1;
FIG. 1B, shows a perspective view of the embodiment of FIG. 1;
FIG. 2 shows a further embodiment of the improved force sensor system;
FIG. 3A-3E show aspects of a still further embodiment of the improved force sensor system;
Therein FIG. 3A shows a top-view;
FIG. 3B, is a cross-section according to IIIB-IIIB in FIG. 3A;
FIG. 3C shows cross-sections thereof according to IIIC-IIIC in FIG. 3B;
FIG. 3D is a perspective view of a sensor cell stack;
FIG. 3E schematically shows a variation of the embodiment of FIG. 3A-3D;
FIG. 4A and 4B show again further embodiments of the improved force sensor system;
FIG. 5A-5C show again further embodiments of the improved force sensor system;
FIG. 6A and 6B show again further embodiments of the improved force sensor system;
FIG. 7 schematically shows an embodiment of an application of the improved force sensor system in a flow sensor;
FIG. 8 shows details of a variation of the embodiment of FIG. 7;
FIG. 9A and 9B depict an alternative embodiment of the improved force sensor system.

### DETAILED DESCRIPTION OF EMBODIMENTS

Like reference symbols in the various drawings indicate like elements unless otherwise indicated.

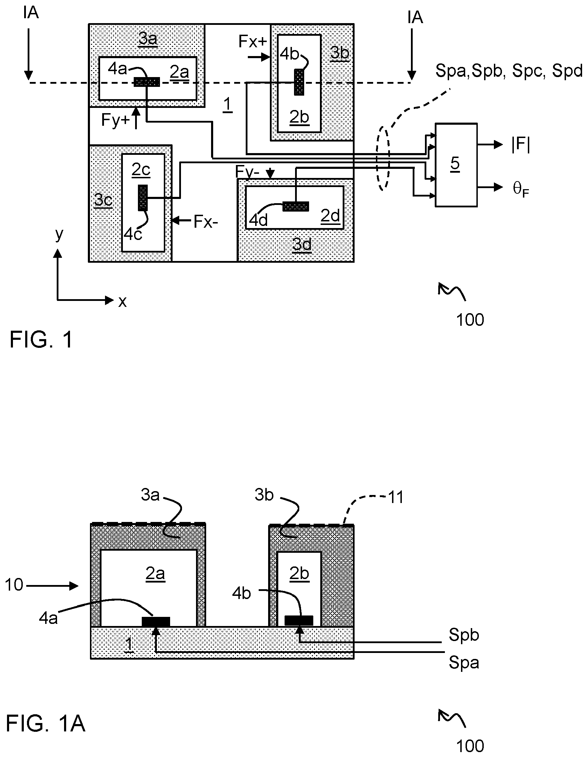

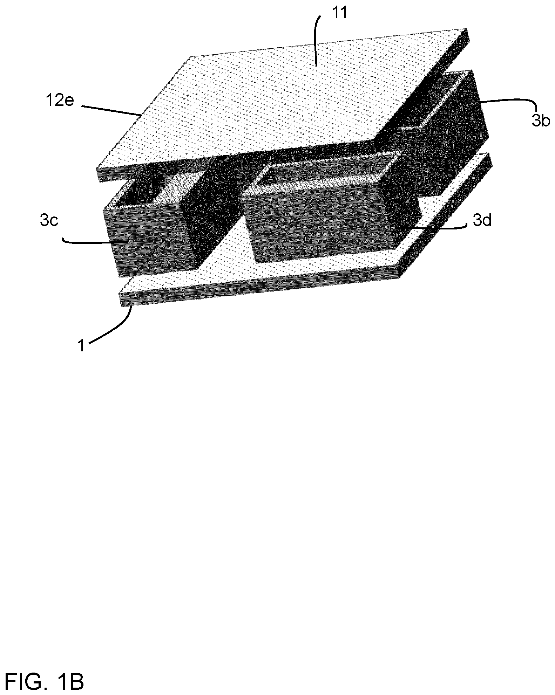

FIG. 1 schematically shows a top view of an embodiment of the improved force sensor system 100 and FIG. 1A shows a cross section thereof according to IA-IA in FIG. 1. As shown therein the embodiment of the improved force sensor system 100 comprises a sensor layer 10 with a contact sensitive surface 11. The sensor layer 10 comprises a plurality of resiliently deformable sensor cells 3a, 3b, 3c, 3d on a carrier substrate 1.

The sensor cells 3a, 3b, 3c, 3d each form an enclosure around a pocket 2a, 2b, 2c, 2d communicating with a pressure sensor 4a, 4b, 4c, 4d that is configured to provide a respective pressure signal Spa, Spb, Spc, Spd, indicative for an inside pressure inside the pocket.

The inside pressure of a sensor cell is dependent on an external force exerted thereon through the contact sensitive surface according to a pressure-force relationship, wherein the pressure to force relationship is dependent on a lateral direction of the external force for two or more of the plurality of sensor cells in a mutually different manner.

The sensor system 100 further comprises a signal processor 5 configured to receive the pressure signals and to provide an output sensor signal based on the received pressure signals.

The pressure sensor signal Spa, Spb,.. is indicative for a deformation occurring in the contact sensitive surface 11. Each pressure signal has a magnitude depending on the magnitude of the deformation of the contact surface and the lateral sensitivity of cell with which the pressure sensor communicates. Due to the fact that two or more sensor cells have a mutually different lateral sensitivity, the output sensor signal is indicative of the lateral direction θ_{F} of the deformation of the contact sensitive surface. In the embodiment shown, the mutually different sensitivity of the sensor cells is determined by the construction of their walls. As an example sensor cell 3a has a relatively thick wall having an outer surface facing the +y direction and has a relatively thin wall having an outer surface facing the -y direction. Therewith it can be deformed relatively easily in the +y direction as compared to the opposite direction -y. The sensor cell 3a is also relatively insensitive to forces exerted in the +x or -x direction due to the relative short walls facing in the +x and the -x direction. As another example sensor cell 3b has a relatively thick wall having an outer surface facing the +x direction and has a relatively thin wall having an outer surface facing the -x direction. Therewith it can be deformed relatively easily in the +x direction as compared to the opposite direction -x. The sensor cell 3b is also relatively insensitive to forces exerted in the +y or -y direction due to the relative short walls facing in the +y and the -y direction. Hence in this exemplary embodiment the specific lateral sensitivity of the sensor cells 3 is achieved by properly dimensioning the sizes and/or thicknesses of the walls. Alternatively or additionally the specific lateral sensitivity of the sensor cells 3 is achieved by the choice of material properties of the wall. In an alternative embodiment for example sensor cell 3a has equally dimensioned side walls, but is rendered sensitive for a pressure exerted in the direction +y in that the side-wall having its outer surface facing in the -y direction has material with a lower elasticity modulus than its other sidewalls.

Because the deformation depends on the force that causes it, the output signal is also suitable as an indication for that force. In some embodiments the signal processor is additionally configured to determine a magnitude of the lateral force or lateral deformation.

As shown by way of example in FIG. 1B, the force sensor system 100 may comprise a shared elastic cover layer 12e over the sensor cell 3a, 3b, 3c, 3d. A lateral force on the force sensitive surface 11 of the shared elastic cover layer 12e allows for an elastic deformation of the appropriate sensor cell. Although the elastic cover layer is also mechanically coupled to the other cells that are not deformable in the direction of the lateral force, this coupling is of an elastic nature and therewith not blocking. In the presence of a lateral force exerted on the contact sensitive surface, both the shared elastic cover layer 12e and the sensor cells in the neighborhood of the affected position will deform until the elastic forces of the sensor cell or sensor cell stacks balance out against the lateral force exerted on the contact sensitive surface. Therewith the sensor cells having a relatively low stiffness in the direction of the applied lateral force will deform more than sensor cells/stacks having a higher stiffness in that direction.

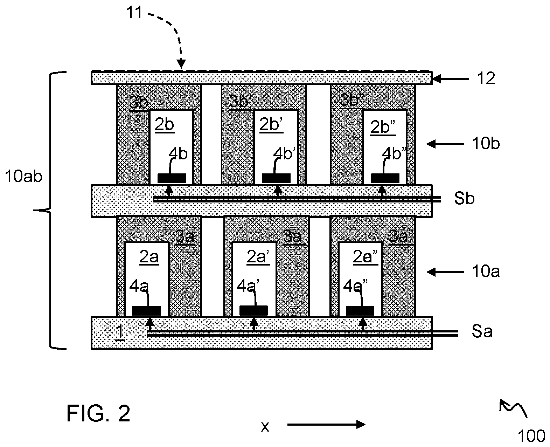

In the exemplary embodiment of FIG. 2, a sensor layer stack 10ab is provided that comprising two or more sensor layers 10a, 10b with a respective lateral sensitivity and each layer comprises a plurality of sensor cells having a lateral direction sensitive pressure to force relationship according to the lateral sensitivity of the sensor layer. In the example shown a sensor layer stack 10ab is provided with a first sensor layer 10a and second sensor layer 10b. The first sensor layer 10a in this example comprises sensor cells 3a, 3a' and 3a" having a lateral sensitivity in the direction +x, and the second sensor layer 10b comprises sensor cells 3b, 3b' and 3b" having a lateral sensitivity in the direction -x. Upon exerting a force on the contact sensitive surface in the direction -x, this will mainly result in a flexure of the sensor cells in the second sensor layer 10b. Upon exerting a force in the opposite direction, the sensor cells in the second sensor layer 10b will substantially preserve their original shape and instead the deformation will occur in the sensor cells of the first sensor layer 10a.

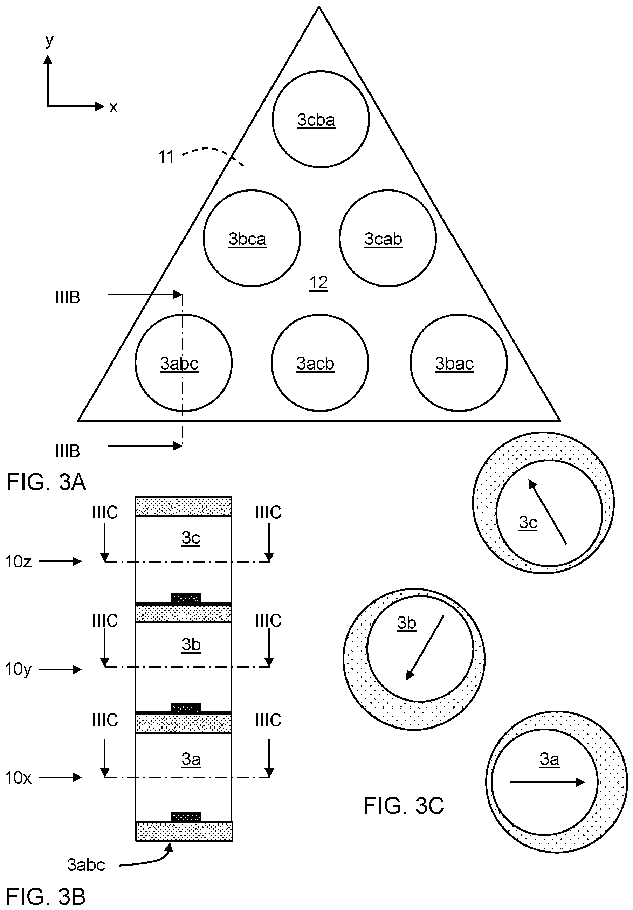

In another example as shown in FIG. 3A-3E the sensor layer 10abc comprises a sensor cell stack of two or more sensor cells 3a, 3b, 3c having a mutually different lateral direction sensitive pressure to force relationship.

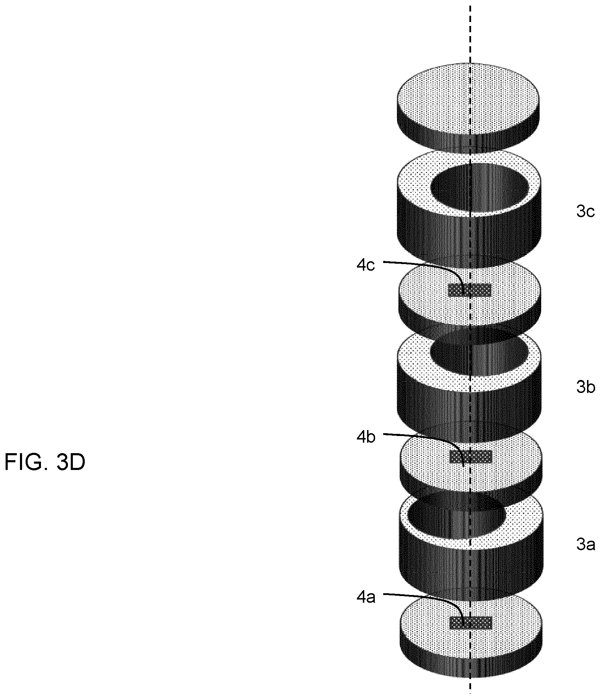

FIG. 3A shows a top-view, on the touch sensitive surface 11 of the product. By way of example one of the sensor cell stacks, the sensor cell stack 3abc is shown in FIG. 3B, which is a cross-section according to IIIB-IIIB in FIG. 3A. Also a perspective view of the sensor cell stack 3abc is shown in FIG. 3D.As shown therein it comprises a stack that subsequently includes a sensor cell 3a a sensor cell 3b and a sensor cell 3c. Cross-sections thereof according to IIIC-IIIC in FIG. 3B are shown in FIG. 3C. In the example shown the cells have a circular symmetric cylindrical outer wall. However the sensor cells 3a, 3b, 3c have walls with a mutually different thickness profile. For example sensor cell 3a has a wall with a smallest thickness at a side where its outer surface faces in the -x direction and a largest thickness at a side where its outer surface faces in the +x direction. Therewith the sensor cell 3a is particularly sensitive for forces exerted in the +x direction. The sensor cell 3b has a wall with a different thickness profile, so that it is particularly sensitive for forces exerted in a direction rotated 120° clockwise relative to the +x direction. The sensor cell 3c has a wall with a thickness profile that renders it particularly sensitive for forces exerted in a direction rotated 120° anti-clockwise relative to the +x direction.

In the example shown, the sensor cell stack 3abc is one of a plurality of sensor cell stacks 3abc, 3acb, 3bac, 3bca, 3cab, 3cba that share common cover layer 12. The order of the characters a, b, c in the suffix indicates the order in which the sensor cells of type 3a, 3b and 3c are arranged. As shown in FIG. 3A any order of sensor cell types 3a, 3b, 3c is represented. An average value for a measured force exerted in the direction x can be obtained from the outputs of the cells 3a. A further average value for a measured force exerted in the direction rotated 120° clockwise relative to the +x direction can be obtained from the outputs of the cells 3b. Also a further average value for a measured force exerted in the direction rotated 120° anti-clockwise relative to the +x direction can be obtained from the outputs of the cells 3c. A measurement bias is avoided due to the fact that each type of sensor cell appears in each stack level.

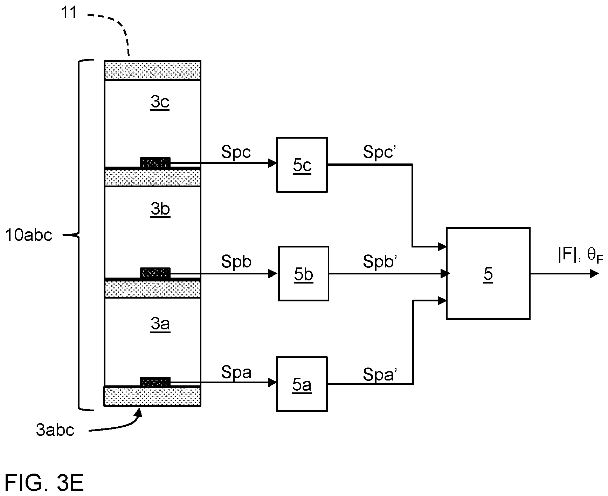

FIG. 3E schematically shows another embodiment with only a single sensor cell stack 3abc. In this example, the response of a sensor cell 3a to a lateral action on the contact sensitive surface may be dependent on its rank in the sensor cell stack or the rank of the sensor cell layer of the sensor cell in the sensor layer stack. In an embodiment shown in FIG. 3E the signal processor comprises a compensation module 5a, 5b, 5c to compensate for this effect. The compensation module 5a, 5b, 5c comprises for example a lookup table or performs a compensation on the basis of a polynomial function.

In an embodiment the cover 12 is an elastic cover layer. The range over which a lateral force on the force sensitive surface 11 is distributed on the array of pillars 3abc, 3acb, ... is dependent on the elasticity and the thickness of the shared elastic cover layer.

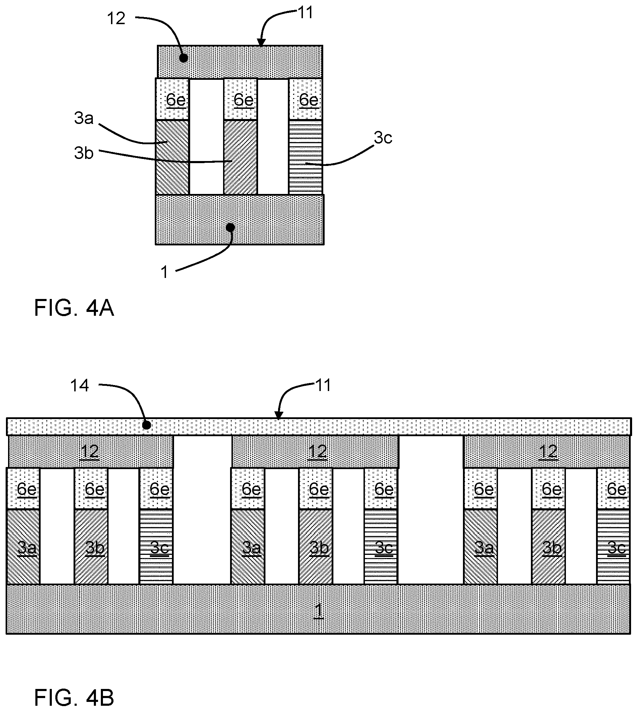

FIG. 4A shows another embodiment wherein sensor cells 3a, 3b, 3c in a sensor cell layer are mechanically coupled to the cover layer 12 and/or to the carrier substrate 1 through an elastic coupling member 6e. Each sensor cell and its elastic coupling member(s) forms an elastically deformable pillar. If a lateral force is exerted on the touch sensitive surface 11, the shared cover layer will exert the lateral force to the elastic coupling members 6e of the pillars. In case the shared cover is stiff, the lateral deformation is the same for the top surface of all pillars. However, the distribution of the deformation between the elastic coupling member and the sensor cell of the pillar depends on the lateral sensitivity of the sensor cell. If the lateral force is applied in a direction for which the sensor cell has a relatively low stiffness then the sensor cell will deform relatively strong. If the lateral force is applied in a direction for which the sensor cell has a relatively high stiffness then the largest deformation will be in the elastic coupling member. The cover layer 12 maybe elastic or not.

FIG. 4B shows an embodiment having a plurality of sensor cell groups, as described with reference to FIG. 4A. In this example a common protection layer 14 that provides the force sensitive surface 11 is arranged over the cover layers of the cells. The common protection layer 14 may be of an elastic material to mechanically couple the sensor cell groups from each other.

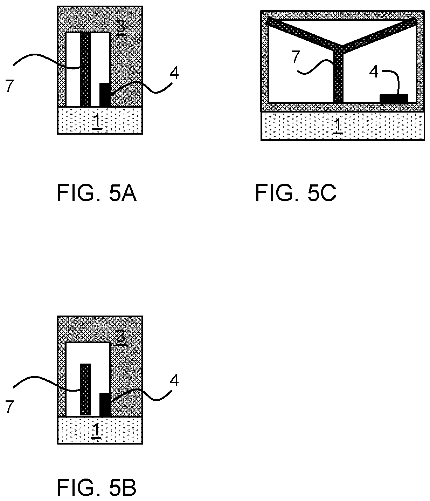

FIG. 5A-5C show examples of a force sensor system wherein a reinforcement structure 7 is provided to mitigate deformations in a direction perpendicular to the touch sensitive surface 11. In the examples shown the reinforcement structure comprises an internal skeleton 7 in accommodated in one or more sensor cells. In an example, for example, as shown in FIG. 5A the internal skeleton 7 is flexible, but not compressible. Therewith it does not restrict a flexure of the sensor cell, but it avoids that the sensor cell is compressed in a direction transverse to the contact sensitive surface 11. In the example shown in FIG. 5B the internal skeleton 7 allows a partial compression but blocks or restricts a further compression. Alternatively, for example as shown in FIG. 5C, an internal skeleton 7 may be provided that blocks or restricts a lateral deformation beyond a threshold value.

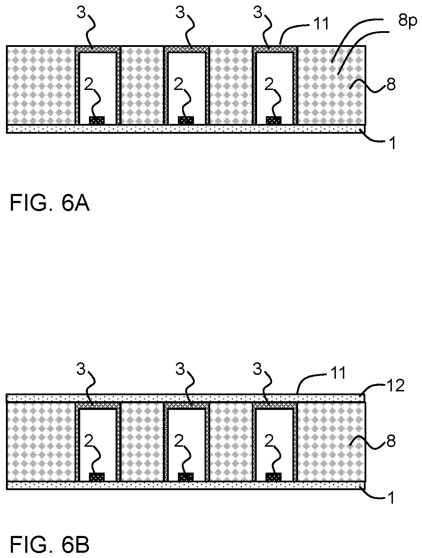

FIG. 6A and 6B show other examples wherein the reinforcement structure comprises an embedding medium 8 between the sensor cells 3. The embedding medium 8 comprises for example a flexible polymer filled with rigid pellets 8p. Therewith the embedding medium 8 and the sensor cells arranged therein are capable to deform laterally, while a compressive deformation is avoided.

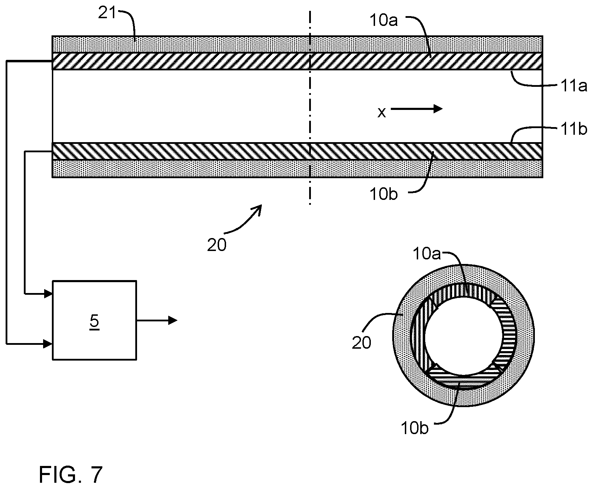

FIG. 7 schematically shows an embodiment of a flow sensor 20 for sensing flow properties of a fluid conducted by a tube 21. The flow sensor comprises a force sensor system 100, which may be any of the embodiments as presented above. Therewith the force sensor layer 10a, 10b of the force sensor system 100 is accommodated with its carrier substrate to an inner wall of the tube. Therewith a fluid conducted by the tube 21 will exert a lateral force on the contact sensitive surface 11a, 11b that is indicative for the magnitude of the flow.

In the example shown in FIG. 7 the force sensor layer comprises a first force sensor layer portion 10a having sensor cells which have a relatively high lateral sensitivity in a first longitudinal direction (-x) of the tube, and a second force sensor layer portion having sensor cells which have a relatively high lateral sensitivity in a second longitudinal direction (x) of the tube, opposite to the first longitudinal direction. Therewith the flow sensor has a bidirectional sensitivity.

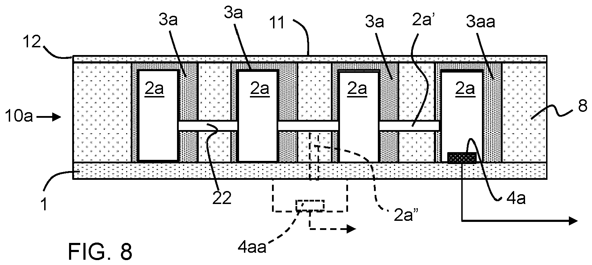

As depicted in FIG. 8, in the application of the force sensor system 100 in a flow sensor it is particularly advantageous if a force sensor layer portion 10a has a plurality of sensor cells 3a with mutually communicating pockets 2a and a common pressure sensor 4a for measuring a pressure therein. The pressure as measured by the pressure sensor 4a is collectively determined by the plurality of sensor cells 3a with mutually communicating pockets 2a, so that local deviations in the flow, for example by a turbulence do not affect the sensor signal of the pressure sensor 4a. In an example, one 3aa of the sensor cells having mutually communicating pockets 2a is provided with the pressure sensor 4a. The pockets of the sensor cells 3a,..,3aa are communicatively coupled through a channel 2a'. In another example the common pressure sensor 4aa is arranged outside the pockets, but is communicatively coupled thereto by an additional channel 2a", as indicated by dotted lines in the figure. It is noted that a shared cover layer may be present or not.

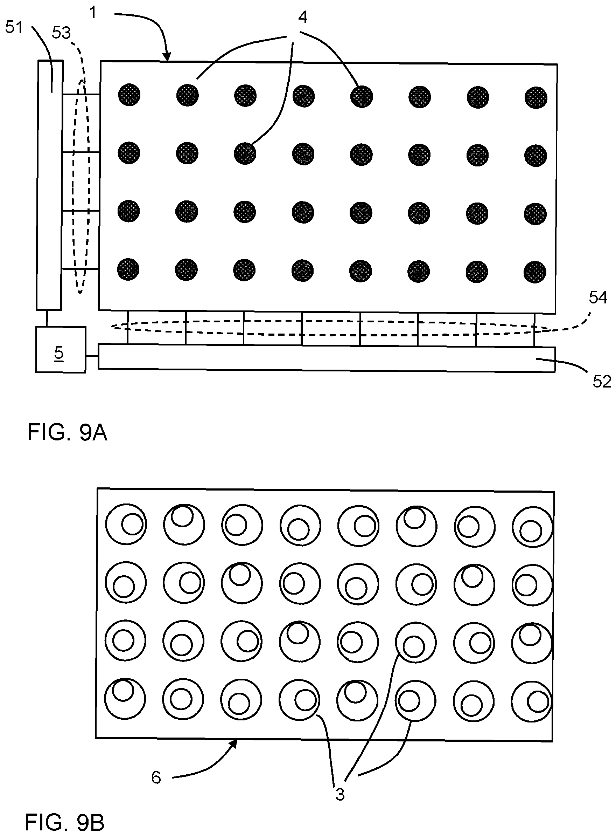

FIG. 9A, 9B show a still further embodiment of the force sensor system 100. In this case the sensor cells (See FIG. 9B) are arranged in a grid in columns and rows. For clarity only the pressure sensors 4 are shown in FIG. 9A. Each pressure sensor 4 is connected to a respective pair of a row line in a set 53 of row lines connected to a row driver 51 and column line in a set 54 of column lines connected to a column driver. Therewith the pressure sensors 4 can be read out individually the signal processor 5. The sensor cells have mutually different direction sensitivity. This is schematically shown in FIG. 9B by a wall thickness profile. As noted above, a specific direction sensitivity may alternatively or additionally achieved by a specific wall elasticity profile. Additionally or alternatively reinforcement structures may be provided to prevent a sensor cell 3 to flex in certain directions.

Embodiments of an improved force sensor system 100 as presented herein can be readily manufactured with the following method. According to the method a carrier substrate 1, a sensor layer having a force sensitive surface and a signal processor 5 are provided. The sensor layer provided therewith comprises a plurality of sensor cells that each form an enclosure around a pocket 2a, 2b, 2c, 2d that communicates with a pressure sensor 4a, 4b, 4c, 4d configured to provide a respective sense signal indicative for an inside pressure inside the pocket. The inside pressure is dependent on an external force exerted through the force sensitive surface on the pocket according to a pressure-force relationship and the pressure to force relationship is dependent on a lateral direction of the external force for two or more of the plurality of cells in a mutually different manner. The signal processor 5 is configured to receive the sense signals and to provide an indication of a lateral direction θ_{F} of a force exerted to the force sensitive surface.

In an efficient implementation the carrier substrate 1 is provided with a grid of pressure sensors 4 as shown in FIG. 9A and a signal transfer structure for transferring pressure sensor signals to the signal processor. In this implementation providing the sensor layer comprises providing a patterned elastic layer having a plurality of hollow pillars and adhering the patterned elastic layer to the carrier substrate to form respective closed cavities accommodating respective pressure sensors. The patterned elastic layer may be created by any one of 3D printing (stereolithographic or fused deposition modeling), molding, and thermoforming.

In an example the method also accommodating in the respective closed cavities respective reinforcement structures for restricting or limiting one or more degrees of freedom. Optionally the method further comprises overmolding the sensor layer.

While the present invention has been described with respect to a limited number of embodiments, those skilled in the art will appreciate numerous modifications and variations therefrom within the scope of this present invention as determined by the appended claims

In the claims the word "comprising" does not exclude other elements or steps, and the indefinite article "a" or "an" does not exclude a plurality. A single component or other unit may fulfill the functions of several items recited in the claims. The mere fact that certain measures are recited in mutually different claims does not indicate that a combination of these measures cannot be used to advantage. Any reference signs in the claims should not be construed as limiting the scope.

## Claims

1. A force sensor system (100) comprising a sensor layer with a contact sensitive surface (11), the sensor layer (10a, 10b, 10c, 10x, 10y, 10z, 10abc) comprising a plurality of resiliently deformable sensor cells (3a, 3b,...) on a carrier substrate (1),
the sensor cells each forming an enclosure around a pocket (2a, 2b, 2c, 2d) communicating with a pressure sensor (4a, 4b, 4c, 4d) that is configured to provide a respective pressure signal (Spa, Spb,...) indicative for an inside pressure inside the pocket,
the inside pressure of a sensor cell being dependent on an external force exerted thereon through the contact sensitive surface according to a pressure-force relationship, wherein the pressure to force relationship is dependent on a lateral direction of the external force for two or more of the plurality of sensor cells in a mutually different manner,
the sensor system (100) further comprising a signal processor (5) configured to receive the pressure signals and to provide an output sensor signal based on the received pressure signals.

2. The force sensor system (100) according to claim 1, wherein the sensor layer (10abc) comprises a sensor cell stack of two or more sensor cells (3a, 3b, 3c) having a mutually different lateral direction sensitive pressure to force relationship.

3. The force sensor system (100) according to claim 2, comprising at least two sensor cell stacks (3abc, 3acb,...) of two or more sensor cells wherein the two or more sensor cells having a mutually different lateral direction sensitive pressure to force relationship are present in a mutually different order.

4. The force sensor system (100) according to claim 3, wherein the at least two sensor cell stacks (3abc, 3acb,) are mechanically coupled to a shared cover (12), of which the free surface is the contact sensitive surface (11).

5. The force sensor system (100) according to claim 1, comprising a shared cover layer (12).

6. The force sensor system (100) according to claim 5, comprising a shared elastic cover layer (12e).

7. The force sensor system (100) according to claim 5 or 6, wherein the sensor cells in a sensor cell layer are mechanically coupled to the cover layer and/or to the carrier substrate (1) through an elastic coupling member (6e).

8. The force sensor system (100) according to one of the preceding claims further comprising a reinforcement structure (7,8) to mitigate deformations in a direction perpendicular to the touch sensitive surface (11).

9. The force sensor system (100) according to claim 8, wherein the reinforcement structure comprises an internal skeleton (7) in one or more sensor cells.

10. The force sensor system (100) according to claim 8 or 9, wherein the reinforcement structure comprises an embedding medium (8) between the sensor cells (3).

11. A flow sensor (20) for sensing flow properties of a fluid conducted by a tube (21), the flow sensor comprising a force sensor system (100) according to claim 1 of which the force sensor layer (10a, 10b) is accommodated with its carrier substrate to an inner wall of the tube.

12. The flow sensor according to claim 11, wherein the force sensor layer comprises a first force sensor layer portion (10a) having sensor cells which have a relatively high lateral sensitivity in a first longitudinal direction (-x) of the tube, and a second force sensor layer portion having sensor cells which have a relatively high lateral sensitivity in a second longitudinal direction (x) of the tube, opposite to the first longitudinal direction.

13. The flow sensor according to claim 11 or 12, comprising a force sensor layer portion (10a) having a plurality of sensor cells (3a) having mutually communicating pockets (2a) and common pressure sensor (4a) for measuring a pressure therein.

14. A method of manufacturing a force sensor system (100), the method comprising:
providing a carrier substrate (1)
providing a sensor layer having a force sensitive surface,
the sensor layer comprising a plurality of sensor cells that each form an enclosure around a pocket (2a, 2b, 2c, 2d) that communicates with a pressure sensor (4a, 4b, 4c, 4d) configured to provide a respective sense signal indicative for an inside pressure inside the pocket,
the inside pressure being dependent on an external force exerted through the force sensitive surface on the pocket according to a pressure-force relationship, wherein the pressure to force relationship is dependent on a lateral direction of the external force for two or more of the plurality of cells in a mutually different manner,
providing a signal processor (5) configured to receive the sense signals and to provide an indication of a lateral direction (θ_{F}) of a force exerted to the force sensitive surface.

15. The method according to claim 14, comprising:
providing the carrier substrate with a grid of pressure sensors and a signal transfer structure for transferring pressure sensor signals to the signal processor;
wherein providing the sensor layer comprises providing a patterned elastic layer having a plurality of hollow pillars and adhering the patterned elastic layer to the carrier substrate to form respective closed cavities accommodating respective pressure sensors.
